Europäisches Patentamt

European Patent Office

Office européen des brevets

Veröffentlichungsnummer: **0 286 831**

**A1**

## EUROPÄISCHE PATENTANMELDUNG

Anmeldenummer: **88103669.3**

Int. Cl.⁴ **G01F 1/00**

Anmeldetag: **09.03.88**

Priorität: **04.04.87 DE 3711463**

Veröffentlichungstag der Anmeldung:
**19.10.88 Patentblatt 88/42**

Benannte Vertragsstaaten:
**AT BE CH DE FR LI**

Anmelder: **GRUNDIG E.M.V.
Elektro-Mechanische Versuchsanstalt Max
Grundig holländ. Stiftung & Co. KG.
Kurgartenstrasse 37
D-8510 Fürth/Bay.(DE)**

Erfinder: **Beuter, Rudolf Grundig E.M.V.
Elektro-Mechanische
Versuchsanstalt Max Grundig Holländ
Stiftung Co KG
Kurgartenstrasse 37 D-8510 Fürth/Bay.(DE)**
Erfinder: **Wagner, Hans Grundig E.M.V.
Elektro-Mechanische
Versuchsanstalt Max Grundig Holländ
Stiftung Co KG
Kurgartenstrasse 37 D-8510 Fürth/Bay.(DE)**

Verfahrens zur Messung des Volumes eines mit Hilfe eines Fördebandes transportierten Schüttgutes.

Das Verfahren dient zur Messung des Volumens pro Zeiteinheit für Schüttgut, das auf einem Förderband transportiert wird und dessen Querschnitt ständig wechselt. Für die zur berührungslosen Messung benutzte Fernsehkamera werden vorteilhafte Meßkonditionen angegeben. Außerdem wird eine neuartige Objektbeleuchtung beschrieben.

EP 0 286 831 A1

Fig. 2

# VERFAHREN ZUR MESSUNG DES VOLUMENS EINES MIT HILFE EINES FÖRDERBANDES TRANSPORTIER-TEN SCHÜTTGUTES

Das erfindungsgemäße Verfahren befaßt sich mit der Volumenmessung von Schüttgut, das auf einem Förderband transportiert wird und dessen Querschnitt senkrecht zum Förderband einem ständigen Wechsel unterworfen ist. Da das zu messende, mit dem Förderband bewegte Schüttgut auch aus Einzelstücken unterschiedlicher Größe bestehen kann, muß die Messung des Querschnitts des Schüttgutes in schneller zeitlicher Folge durchgeführt werden. Außerdem ist es für eine zuverlässige Querschnittsmessung erforderlich, einen möglichst hohen optischen Kontrast zwischen Schüttgut und Umfeld zu erzeugen. Wenn die Querschnittsmessung des Schüttgutes mit ausreichender Genauigkeit und Häufigkeit durch Auswertung der Ausgangssignale einer oder mehrerer Fernsehkameras durchgeführt ist, kann bei konstanter Geschwindigkeit des Förderbandes durch Integration über die Zeit für jede gewünschte Zeiteinheit das geförderte Volumen des Schüttgutes errechnet werden.

Aufgabe der Erfindung ist es, ein Verfahren anzugeben, bei dem durch bestimmte Anordnung einer oder mehrerer Fernsehkameras über dem Förderband und durch eine vorteilhafte Ausleuchtung des Meßfeldes, eine zuverlässige Messung des transportierten Schüttgutvolumens erreicht wird.

Mit Hilfe der beiden Figuren soll nun das erfindungsgemäße Verfahren näher erläutert werden.

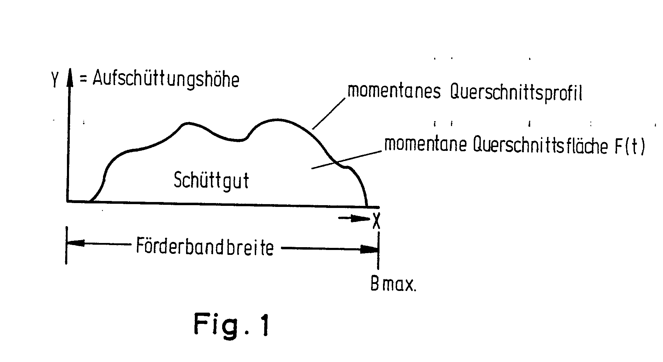

Figur 1 zeigt das angenommene momentane Querschnittsprofil des Schüttgutes. Der Förderbandbreite ist die mit X bezeichnete Abszisse, der Aufschüttungshöhe ist die mit Y bezeichnete Ordinate eines gedachten Koordinatensystems zugeordnet. Die momentane Querschnittsfläche F (t) erhält man durch Integration der Aufschüttungshöhe Y über die Aufschüttungsbreite X.

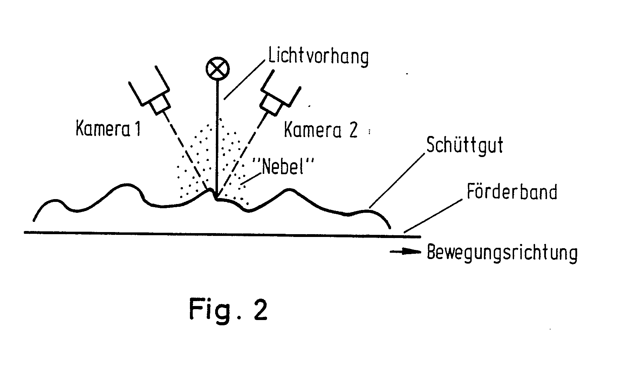

Figur 2 zeigt den angenommenen momentanen Querschnitt des auf dem Förderband liegenden Schüttgutes in Bewegungsrichtung des Förderbandes. Aus dieser Figur ist die erfindungsgemäße Anordnung einer oder zweier Fernsehkameras über dem Schüttgut dargestellt.

Außerdem erkennt man den Lichtvorhang in der senkrecht zum Förderband liegenden Meßebene. In Weiterbildung des Erfindungsgedankens wird durch Nebel aus fein verteilten, schwebenden Flüssigkeitstropfen der Lichtvorhang besser sichtbar gemacht, so daß am Übergang vom Schüttgut zum Umfeld ein starker optischer Kontrast entsteht. Die optischen Achsen der beiden eingezeichneten Fernsehkameras sind so ausgerichtet, daß sie in mittlerer Schüttguthöhe die Meßebene, die mit der Ebene des Lichtvorhanges übereinstimmt, durchstoßen. Die in der Figur dargestellte momentane Situation zeigt, daß es bei Verwendung nur einer Fernsehkamera zu Meßfehlern kommen kann. Die optische Achse der Kamera 1 trifft nämlich das Schüttgut nicht in der Meßebene, weil eine Abschattung duch eine Schüttguterhebung in der Nähe der Meßebene erfolgt. In vorteilhafter Weiterbildung des Erfindungsgedankens werden deshalb zwei Fernsehkameras vorgesehen, von denen eine mit hoher Wahrscheinlichkeit die richtige Schüttguthöhe, die zugleich der niedrigere Wert von beiden ist, ermittelt. Die Auswahl der wahrscheinlicheren Schüttguthöhe wird durch einen entsprechenden Rechenvorgang sichergestellt.

Die Figur 2 zeigt weiter, daß die Schrägstellung der Fernsehkameras eine Umrechnung der aus dem Videosignal ermittelten scheinbaren Schüttguthöhe in den Ordinatenwert Y für die wirkliche Schüttguthöhe erforderlich macht. Die wirkliche Schüttguthöhe entspricht nämlich der Projektion der von der Kamera erfaßten Höhe in die Meßebene, das heißt, es muß in Abhängigkeit vom Neigungswinkel der Kamera eine Cosinusfunktion in den Rechenvorgang eingeführt werden.

Die von der Fernsehkamera erfaßten Meßgutquerschnitte werden optisch auf der lichtempfindlichen Sensorfläche der Kamera nach Maßgabe des durch das Aufnahmeobjektiv und die Abstandsverhältnisse gegebenen Abbildungsmaßstabes dargestellt. Erfindungsgemäß wird dabei durch Anwendung des Lichtvorhanges mit nebelförmigen Schwebeteilchen ein kontrastreicher Schwarz-Weiß-Sprung erzeugt, der die Kontur des Schüttgutquerschnittes beschreibt.

Die Sensorfläche der Fernsehkamera wird in bekannter weise rasterförmig abgetastet, wobei das auftreffende Licht in elektrische Signale umgewandelt wird. Die rasterförmige Zeilenabtastung kann so erfolgen, daß die Zeilen parallel oder senkrecht zur Basislinie des erfaßten Schüttgutquerschnittes erfolgen. Im ersten Fall ist die Anzahl der Zeilen, die ein Schwarzsignal liefern, ein Maß für die Schüttguthöhe. Im zweiten Fall ist der Anteil der Zeilendauer, für den ein Schwarzsignal geliefert wird, ein Maß für die Schüttguthöhe.

Es ist vorteilhaft, die Fernsehkamera mit einem Halbleiter-Sensor anstatt mit einer konventionellen Aufnahmeröhre auszustatten. Der Halbleiter-Sensor zeichnet sich nämlich infolge der exakten geometrischen Anordnung der einzelnen Sensorelemente durch einen exakten linearen Zusammenhang zwischen den durch die Aufnahmeoptik abgebildeten Objektdimensionen und dem zeitlichen Ablauf der Sensorabtastung aus.

Falls das Förderband sich nicht mit konstanter Geschwindigkeit bewegt, kann es notwendig sein, einen Geschwindigkeitssensor am Förderband anzubringen und die dabei gemessene Istgeschwindigkeit in den geschilderten Rechenvorgang einzubeziehen.

Konventionelle Fernsehkameras arbeiten mit einer Rasterfrequenz von 50 oder 60 Hz. Falls das Förderband bzw. das Schüttgut sehr schnell bewegt wird, kann es notwendig sein, die Rasterfrequenz gegenüber dem konventionellen Wert zu erhöhen, um den Schüttgutquerschnitt mit genügender Genauigkeit zu erfassen.

**Ansprüche**

1. Verfahren zur Messung des Volumens eines mit Hilfe eines Förderbandes transportierten Schüttgutes, wobei mit fotoelektrischen Mitteln der Querschnitt des Schüttgutes senkrecht zur Transportrichtung ermittelt wird, **gekennzeichnet** durch die Kombination folgender Merkmale:

- Die Messung des Querschnittes in einer gegenüber dem Förderband feststehenden und zum Förderband wie zur Transportrichtung senkrechten Meßebene erfolgt mit einer oder mehreren Fernsehkameras, wobei die optische Achse jeder Fernsehkamera diese Ebene in einem Punkt schneidet, der etwa der mittleren Höhe des Schüttgutes entspricht.
- Für die kontrastreiche Darstellung der Kontur des Schüttgutes wird die gegenüber dem Förderband feststehende und zum Förderband senkrechte Meßebene durch einen Lichtvorhang markiert.

- Die von der Fernsehkamera oder den Fernsehkameras erzeugten Videosignale werden, gegebenenfalls nach Umwandlung in Digitalsignale, einer Rechenoperation unterworfen, wobei unter Berücksichtigung der Neigung der optischen Achse gegenüber der Meßebene der Querschnitt des Schüttgutes senkrecht zum Förderband errechnet wird.

- Durch Integration des errechneten Querschnittes über die Zeit wird das Volumen des Schüttgutes Pro gewünschter Zeiteinheit ermittelt.

2. Verfahren nach Anspruch 1, **dadurch gekennzeichnet,** daß zur sicheren Ermittlung des Querschnittes des Schüttgutes zwei Fernsehkameras verwendet werden, von denen eine in Transportrichtng des Förderbandes vor, eine zweite hinter der Meßebene die Kontur des Schüttgutes erfaßt und daß von den beiden errechneten Querschnitten und/oder errechneten Schüttguthöhen der jeweils kleinere Wert weiter verarbeitet wird.

3. Verfahren nach einem oder mehreren der vorangehenden Ansprüche, **dadurch gekennzeichnet,** daß der Lichtvorhang in der Meßebene mit Hilfe einer Laser-Optik erzeugt wird.

4. Verfahren nach einem oder mehreren der vorangehenden Ansprüche, **dadurch gekennzeichnet**, daß der Lichtvorhang durch Vernebelung mit fein verteilten Flüssigkeitstropfen oder staubartigen Schwebeteilchen deutlich sichtbar gemacht wird.

5. Verfahren nach einem oder mehreren der vorangehenden Ansprüche, **dadurch gekennzeichnet,** daß der Lichtvorhang mit monochromatischem Licht erzeugt wird und jede Fernsehkamera in ihrer Lichtempfindlichkeit durch ein optisches Filter, das vorwiegend für dieses monochromatische Licht durchlässig ist, an das für den Lichtvorhang verwendete Licht angepaßt wird.

Fig. 1

Fig. 2

| | EINSCHLÄGIGE DOKUMENTE | | EP 88103669.3 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int Cl 4)** |
| X | DE - B2 - 2 100 280 (RHEINISCHE) <br> * Spalte 6, Zeile 5 - Spalte 8, Zeile 15; Fig. * <br> -- | 1 | G 01 F 1/00 |
| A | DE - A1 - 3 411 540 (KRUPP) <br> * Seite 6, letzter Absatz - Seite 7; Fig. 1,3 * <br> -- | 1-3,5 | |
| A | DE - A1 - 3 516 939 (INSTITUT) <br> * Fig.; Seite 9, Absatz 2 * <br> ---- | 5 | |
| | | | **RECHERCHIERTE SACHGEBIETE (Int. Cl 4)** <br><br> G 01 F 1/00 <br> G 01 N 21/00 |

Der vorliegende Recherchenbericht wurde für alle Patentansprüche erstellt.

| Recherchenort | Abschlußdatum der Recherche | Prüfer |
|---|---|---|
| WIEN | 14-07-1988 | BURGHARDT |